# EUROPEAN PATENT SPECIFICATION

(11) **EP 1 391 975 B1**
(45) Date of publication and mention of the grant of the patent: **14.10.2009**
(21) Application number: 02730694.3
(22) Date of filing: 23.05.2002
(51) Int. Cl.: H02K 1/18, H02K 15/02, H02K 1/06, H02K 15/12

(54) **LAMINATED CORE AND METHOD OF PRODUCING LAMINATED CORE**
LAMINIERTER KERN UND VERFAHREN ZUR HERSTELLUNG DES LAMINIERTEN KERNS
NOYAU FEUILLETE ET PROCEDE DE PRODUCTION DUDIT NOYAU

(30) Priority: 25.05.2001 JP 2001157239
(43) Date of publication of application: 25.02.2004
(73) Proprietor: Mitsui High-Tec, Inc., Kitakyushu-shi, Fukuoka 806-8588 (JP)
(72) Inventor: FUJITA, Katsufusa, c/o Mitsui High-tec, Inc., Kitakyushu-shi, Fukuoka 806-8588 (JP)
(74) Representative: Vossius & Partner
(86) International application number: PCT/JP2002/004976
(87) International publication number: WO 2002/097948

(56) References cited:
- EP-A2- 0 847 109
- EP-A2- 0 903 837
- DE-C1- 4 009 813
- JP-A- 2 026 255
- JP-A- 7 185 695
- JP-A- 7 322 536
- JP-A- 9 294 343
- JP-A- 48 020 003
- JP-A- 2000 245 083
- JP-U- 2 008 005
- JP-U- 61 027 444
- US-A- 4 160 182
- US-A- 4 658 502

## Description

The present invention relates to a laminated iron core formed by laminating thin plates having magnetism (e.g., silicon steel plates). Here, the laminated iron core is used, for example, as a rotor or a stator of an electric motor etc.

Conventionally, to improve an output of a motor or obtain a small and lightweight motor with higher efficiency, a laminated iron core with a predetermined thickness produced by laminating a plurality of iron core pieces obtained by blanking a thin steel plate by press work has been used for such as a rotor core or a stator core. When a plurality of thin iron core pieces are laminated, for instance, caulked-joint portions such as V-shaped (valley-shaped) projections or cut and folded projections (or embossed projections) are formed in each of the iron core pieces and the respective iron core pieces are laminated by being caulked one another through the caulked-joint portions.

However, when the thickness of the iron core pieces is less than 0.2 mm, it has been difficult to realize the sufficient caulking strength by the caulked-joint portions such as the V-shaped projections or cut and folded projections according to the conventional method because the mutually-engaging length of the iron core pieces connected one above the other is too short. Therefore, because caulked joint strength among the respective iron core pieces forming the laminated iron core is weak, there has been a problem such as that the laminated iron core which has been assembled is separated or dimensional deterioration occurs. EP-A-0 847 109 discloses a laminated article comprising coupling elements of male - female type.

The present invention has been achieved in view of such a situation and aims to provide a laminated iron core which has a large caulked-joint strength and will not be separated nor cause dimensional deterioration even when iron core pieces e.g., less than 0.2 mm in plate thickness are used.

This object can be achieved by the features specified in the claims.

A laminated iron core according to the present invention for attaining the above-described objects comprises iron core pieces having caulking projections and disposed by predetermined layers, a protruding length of the caulking projections being at least twice as long as a plate thickness of the iron core pieces, and at least two iron core pieces having through-engaging holes for the caulking projections to be fitted in and laminated under the respective iron core pieces having the caulking projections, wherein the respective iron core pieces having the caulking projections are provided at locations different from locations where the caulking projections are formed with part of through-engaging holes (namely, lower engaging holes, punched holes) for caulking projections jointing an above iron-core-piece layer, namely iron core pieces laminated above, to be fitted in. Thereby, thickness (length) of the through-engaging holes in which the caulking projections to be fitted can be secured. Further, the iron core piece at the bottom of the through-engaging holes for the caulking projections to be fitted in may be an iron core piece at a further lower position of an iron core piece having the caulking projections in the succeeding lower layer. Accordingly, the laminated iron core can be made stronger.

In the laminated iron core according to the present invention, proximal portions of the caulking projections are narrowed toward tips thereof, and among the through-engaging holes formed in the plurality of iron core pieces, the through-engaging holes of the iron core pieces disposed right under the respective iron core pieces having the caulking projections are made broader than a width of the caulking projections. Therefore, the caulking projections are easily fitted in the iron core pieces which are disposed right under the respective iron core pieces having the caulking projections. Moreover, after the caulking projections are fitted in a little, the through-engaging holes (upper engaging holes) of the iron core pieces work as guides of the caulking projections.

In the laminated iron core according to the present invention, it is still preferable that concave portions are formed partly on circumferential edges of the through-engaging holes formed in the iron core pieces. Accordingly, the caulking projections partly fit in the concave portions, whereby improving the caulking strength.

In the laminated iron core according to the present invention, it is still preferable that two or more of the concave portions are formed, and the respective concave portions are formed symmetrically to the axes of the through-engaging holes. Thereby, ill balance in the caulking projections is less likely to occur, and as a result, offset laminating of the iron core pieces does not occur.

In the laminated iron core according to the present invention, it is still preferable that the caulking projections have an approximate trapezoidal or approximate multistep trapezoidal shape in a side view. Thereby, corners of the caulking projections dig into the through-engaging holes, and moreover, twisting of the caulking projections does not occur. Further, the caulking projections in this case may be formed with opposing two sides of the caulking projections cut off from the iron core piece or without every side wall of the caulking projections detached from the iron core piece.

In the laminated iron core according to the present invention, it is preferable that the tips of the caulking projections are fitted in the through-engaging holes and broadened by being pressed. Therefore, engagement between the caulking projections and the through-engaging holes becomes secure.

Next, a laminated iron core according to the present invention can be produced by a method, in which caulking projections and through-engaging holes are formed on a number of iron core pieces blanked from a thin plate made of a magnetic material and the iron core pieces are caulked-jointed while being laminated by using a press machine, the method comprising: a process A of blanking a plurality of iron core pieces wherein through-engaging holes are formed from a thin plate made of a magnetic material and then laminating the iron core pieces by using a press machine; a process B of laminating an iron core piece having caulking projections to be fitted to the bottom of the through-engaging holes formed in the plurality of iron core pieces laminated in the previous process, the iron core piece further having punched holes to be part of through-engaging holes for new caulking projections at above positions (namely, in an above layer) to be fitted in, the new caulking projections being formed at locations different from locations where the caulking projections are formed in the iron core piece; and a process C of laminating an iron core piece having punched holes to be part of through-engaging holes in alignment with the axes of the punched holes of the iron core pieces laminated in the process B, wherein the process B and process C are repeated and a final process comprises the process B so as to form a laminated iron core laminated to a predetermined thickness. Thereby, the laminated iron core wherein positions where the caulking projections dig into the plurality of iron core pieces are changed (namely, not to be overlapped) in a laminating direction adjoining one over another can be produced using a press machine.

In the method for producing a laminated iron core, a step of forming the punched holes which form the through-engaging holes may be omitted in the process B at the final process. Therefore, processing useless holes on a topmost portion of the laminated iron core can be eliminated.

In the method for producing a laminated iron core, the laminated iron core is preferably a motor core, and rotation of the laminated iron core pieces may be performed after the process B is completed. Here, "rotation" means, when laminating the iron core pieces, to rotate the iron core pieces by 360 degrees/n (n is a natural number) after laminating a predetermined number of sheets of the iron core pieces. As a result, the laminated iron core with a predetermined thickness can be formed even when the iron core pieces are uneven in thickness.

In the method for producing a laminated iron core, it is still preferable that a protruding length of the caulking projections is longer than a total length (thickness) of the through-engaging holes for the caulking projections to be fitted, proximal portions of the caulking projections are broadened, and distal portions of the caulking projections are crushed (namely broadened) at the time of laminating. As a result, engagement between the caulking projections and the through-engaging holes becomes secure, and the laminated iron core becomes stronger.

In the method for producing a laminated iron core it is still preferable that a plurality of concave portions are formed equally at least on circumferential edges of the lower part of the through-engaging holes. Consequently, part of the caulking projections fits in the concave portions, and moreover, the tips of the concave portions become catches. Consequently, the caulking projections are prevented from falling off.

The invention is described in detail in conjunction with the drawings, in which;
FIG. 1 is a schematically illustrating view of a laminated iron core according to a first embodiment of the present invention,
FIG. 2 is a schematically illustrating view of a laminated iron core according to a second embodiment of the present invention,
FIG. 3 is a schematically illustrating view of concave portions formed on an internal circumference of a through-engaging hole,
FIG. 4 is an illustrating view showing a general structure of modified concave portions formed on an internal circumference of a through-engaging hole of the laminated iron core,
FIG. 5 is a perspective view of a laminated iron core according to a third embodiment of the present invention,
FIG. 6 is a partially sectional view at a cross section P in FIG. 5,
FIG. 7 is a conceptual diagram of a press machine used in a method of producing the laminated iron core,
FIG. 8 is an illustrating view showing a blanking process of the laminated iron core, and
FIG. 9 is a schematically illustrating view showing a blanking process of a laminated iron core according to a fourth embodiment of the present invention.

In the following, embodiments of the present invention will be described while referring to the accompanying drawings.

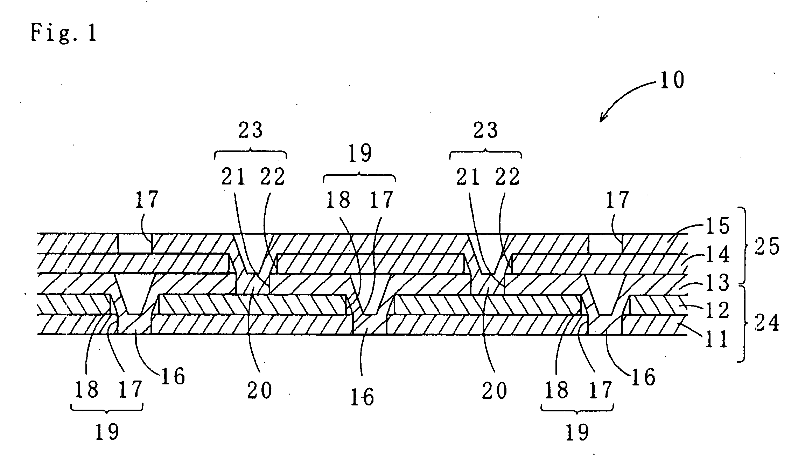

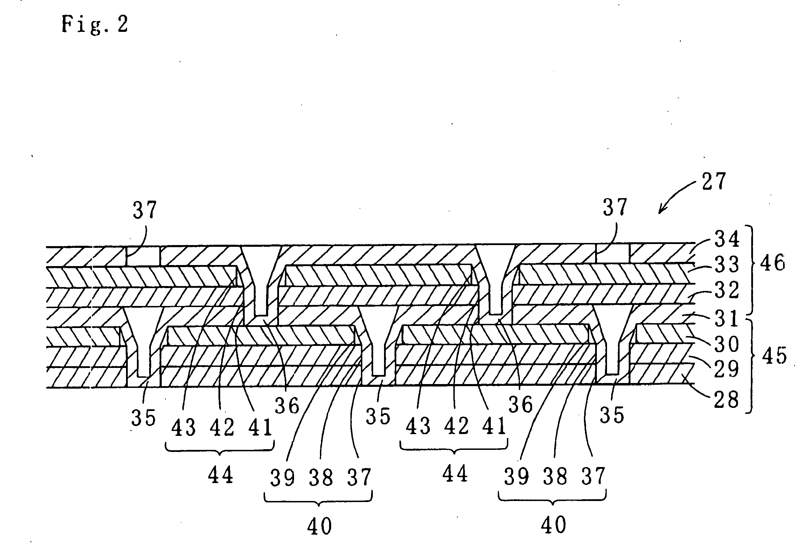

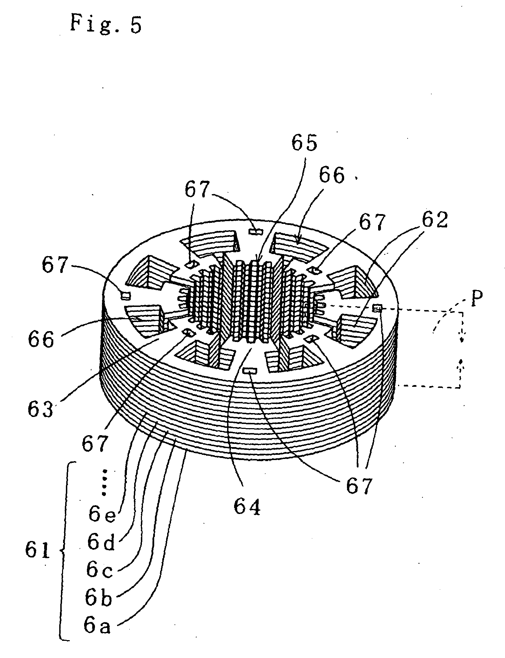

As shown in FIG. 1, a laminated iron core 10 according to a first embodiment of the present invention comprises five iron core pieces 11 to 15 having substantially the same thickness. A plurality of caulking projections 16 are formed on the iron core piece 13. The respective caulking projections 16 have a protruding length twice as long as a plate thickness of the iron core piece 13, and are fitted in through-engaging holes 19 in a coherent manner. The respective through-engaging holes 19 comprise lower and upper engaging holes 17 and 18 formed on the iron core pieces 11 and 12, respectively. A plurality of caulking projections 20 are formed on the iron core piece 15. The respective caulking projections 20 have a protruding length twice as long as a plate thickness of the iron core piece 15, and are fitted in through-engaging holes 23 in a coherent manner. The respective through-engaging holes 23 comprise lower and upper engaging holes 21 and 22 formed on the iron core pieces 13 and 14, respectively. Each of the plurality of caulking projections 16 and 20 is disposed at a different location in a plan view of the iron core pieces 13 and 15, and further in detail, the caulking projections 16 and 20 are alternately disposed at predetermined intervals in a plan view in the present embodiment. Furthermore, although the actual laminated iron core has a ring shape in a plan view as shown in FIG. 5, the laminated iron core is shown by being developed linearly in FIG. 1 (the same in FIG. 2).

As shown in FIG. 1, the iron core piece 13 is used mutually by a lower laminated portion 24 and an upper laminated portion 25 in this embodiment. The laminated iron core 10 has the lower laminated portion 24 comprising the iron core pieces 11 to 13 and the upper laminated portion 25 comprising the iron core pieces 13 to 15. These laminated portions 24 and 25 are alternately laminated so as to form the laminated iron core 10 with a predetermined thickness. The engaging holes 17 formed on the iron core piece 15 show part of through-engaging holes in which caulking projections of an iron core piece at a further upper position (not shown) are fitted.

The engaging holes 17' and 18 forming the through-engaging holes 19, and the engaging holes 21 and 22 forming the through-engaging holes 23 comprise punched holes formed by press work and have a rectangular shape in a plan view respectively. The engaging holes 18 and 22 are made larger than the engaging holes 17 and 21, respectively. Moreover, the engaging holes 17 and 21 have the same shape and size, while the engaging holes 18 and 22 have the same shape and size.

As described earlier, the caulking projections 16 and 20 fitted in the through-engaging holes 19 and 23 respectively have a protruding length twice as long as the thickness of the respective iron core pieces 11 to 15. The caulking projections 16 and 20 have a rectangular cross sectional shape that is substantially similar to or the same as the plan shape of the engaging holes 17 and 18 and the engaging holes 21 and 22. The caulking projections 16 and 20 have an approximate trapezoidal shape of which proximal portion is broadened and gradually narrowed toward the tip. Furthermore, the caulking projections 16 and 20 are formed on the iron core pieces 13 and 15 at a predetermined pitch in alignment with locations of the through-engaging holes 19 and 23, respectively. The caulking projections 16 and 20 are fitted in the through-engaging holes 19 and 23 respectively in a cohesive manner, thereby firmly connecting the iron core pieces 11 to 13 and the iron core pieces 13 to 15.

The laminated iron core 10 is produced, as it will be described later, by blanking out the respective iron core pieces 11 to 15 from a strip material which is a thin steel plate (made of a magnetic material) by press work and laminating the iron core pieces in a die installed in a press machine. When the iron core pieces 13 and 15 provided with the caulking projections 16 and 20 are laminated, the stacked iron core pieces are pressed strongly, for example, by operating pressurization mechanism (e.g., hydraulic cylinder not shown) connected to later described bottom-plate blocks 129 and 130 (refer to FIG. 5) so as to fit the distal portions of the caulking projections 16 and 20 into the through-engaging holes 19 and 23, respectively. As a result, strength of the laminated iron core 10 can be improved. In this case, the caulking projections 16 and 20 can be fixed firmly to the through-engaging holes 19 and 23 by protruding the caulking projections 16 and 20 from the bottoms of the respective iron core pieces 11 and 13 within a slight range (e.g., the protruding length being 1 to 10 % of the thickness of the iron core piece) and expanding the tips of the caulking projections 16 and 20 by press-laminating.

Furthermore, since the shape of the caulking projections 16 and 20 is an approximate trapezoidal shape in a side view, the size of the engaging holes 18 and 22 formed on the iron core pieces 12 and 14 which directly contact the iron core pieces 13 and 15 whereon the caulking projection 16 and 20 are formed is made larger than that of the engaging holes 17 and 21 formed on the lower iron core pieces 11 and 13. Because of such a structure, it becomes possible to make the caulking projections 16 and 20 reliably dig into the through-engaging holes 19 and 23, respectively (it is also the same in the following embodiments).

Next, an outline of a laminated iron core 27 according to a second embodiment of the present invention will be described referring to FIG. 2. The laminated iron core 27 comprises iron core pieces 28 to 34 having substantially the same thickness, and the iron core pieces 31 and 34 are provided with caulking projections 35 and 36 protruding downward. In the iron core pieces 28 to 30, a plurality of thorough-engaging holes 40 are formed, each of which comprises a lower engaging hole 37, a middle engaging hole 38, and an upper engaging hole 39. In the through-engaging holes 40, the caulking projections 35 formed on the iron core piece 31 are fitted in a cohesive manner. Also in the iron core pieces 31 to 33, a plurality of through-engaging holes 44 are formed, each of which comprises a lower engaging hole 41, a middle engaging hole 42, and an upper engaging hole 43. In the through-engaging holes 44, the caulking projections 36 formed on the iron core piece 34 are fitted in a cohesive manner. Consequently, compared with the laminated iron core 10 according to the first embodiment, a depth of the through-engaging holes 40 and 44 wherein the caulking projections 35 and 36 are fitted is increased by one iron core piece, and a downwardly-protruding length of the caulking projections 35 and 36 is three times as long as the thickness of the iron core pieces 31 and 34. Thereby, the iron core pieces 28 to 31 form a lower laminated portion 45, and the iron core pieces 31 to 34 form an upper laminated portion 46. The iron core piece 31 is used mutually in the laminated portions 45 and 46, whereby the lower and upper laminated portions 45 and 46 are connected. These laminated portions 45 and 46 are further laminated sequentially and alternately, thereby forming the laminated iron core 27 with a predetermined thickness. Planer locations of the caulking projections 35 and 36 provided to the iron core pieces 31 and 34 are different. The caulking projections 35 and 36 have a rectangular shape at cross section, and have an approximate trapezoidal shape in a side view. The lower and middle engaging holes 37 and 38 wherein the caulking projections 35 (also the same for the caulking projections 36) are fitted have a rectangular shape in a plan view as the cross sectional shape of the distal portions of the caulking projections 35. The upper engaging holes 39 wherein the caulking projections 35 are fitted are rectangular in a plan view but larger than the engaging holes 37 and 38 so that the caulking projections 35 can be fitted in easily. In addition, the engaging holes 37 to 39 forming the through-engaging holes 40, the engaging holes 41 to 43 forming the through-engaging holes 44, and the caulking projections 35 and 36 are formed by press work, and then the caulking projections 35 and 36 are laminated in a die installed in a press working machine, whereby the laminated iron core 27 is produced entirely.

The engaging holes 17, 18, 21, and 22 wherein the caulking projections 16 and 20 are fitted as shown in FIG. 1, and the engaging holes 37 to 39, and 41 to 43, wherein the caulking projections 35 and 36 are fitted as shown in FIG. 2 will be further described. In the above-described embodiments, all of these engaging holes have a rectangular (quadrangle) shape in a plan view, however, the shape of the engaging holes may be circular, oval or polygonal in a side view depending on the shape of the caulking projections. Also in this case, the engaging holes (upper engaging holes) formed right under the iron core piece whereon the caulking projections are formed are preferably larger than the engaging holes formed thereunder in such a manner as one side thereof is larger in a range of e.g., 10 to 40 %.

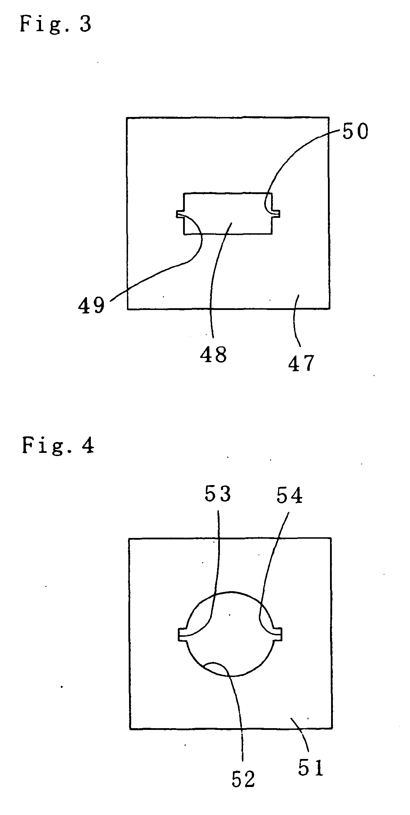

Moreover, concave portions are preferably formed on the circumferential edges of the lower engaging holes 17 and 21 wherein the caulking projections 16 and 20 are fitted, and of the lower and middle engaging holes 37, 38, 41, and 42 wherein the caulking projections 35 and 36 are fitted. This state will be described as an exemplification using FIG. 3. In FIG. 3, an engaging hole 48 formed in an iron core piece 47 represents the above-mentioned engaging holes 17, 21, 37, 38, 41, and 42. The engaging hole 48 has a rectangular shape and provided with concave portions (notches) 49 and 50 at both sides in a longitudinal direction thereof. In this case, on the caulking projection not shown and to be fitted in the engaging hole 48, linear protruding portions to be fitted into the concave portions 49 and 50 are not formed. However, when the caulking projection is inserted in the engaging hole 48 and pressed strongly, part of the caulking projection digs into the concave portions 49 and 50, whereby the caulking projection and the engaging hole 48 are fixed firmly. In this case, the caulking projection is preferably made to protrude from the bottommost engaging hole in a slight range (e.g., in a range of 1 to 10 % of the thickness of the iron core piece, still preferably in a range of 2 to 8 %). Accordingly, when the iron core pieces are laminated in a press machine (or it may be outside of a press machine) , the distal portions of the caulking projections broaden by being pressed strongly from top and bottom, and part of the caulking projections dig into the concave portions 49 and 50. At this point, protruding corner portions of the concave portions 49 and 50 work as fall-off preventing hooks which dig into the caulking projections, thus the iron core pieces are caulked-jointed more firmly. In such a way, concave portions are formed to prevent the caulking projections matching to the through-engaging holes 19, 23, 40 and 44 from falling off.

Although the engaging holes have a rectangular shape in the above described embodiments, in FIG. 4, a case where an engaging hole 52 formed in an iron core piece 51 has a circular shape and is provided with concave portions 53 and 54 on both sides on circumferential edge thereof is shown. Also in this case, when a caulking projection is fitted in the engaging hole 52 and pressed from top and bottom, part of the caulking projection digs into the concave portions 53 and 54, whereby caulked joints of the respective iron core pieces can be strong. In this case, the shape of the caulking projection is an approximate truncated corn.

In addition, since the concave portions 49, 50, 53 and 54 are provided to the engaging holes 48 and 52, the caulking projections are restrained from rotating or moving freely. As a result, the caulked-joint strength as a laminated iron core is improved, and at the same time, stability of the shape is ensured.

Although two concave portions are provided to the each engaging hole in the above embodiments, the present invention is not limited to the number. Moreover, when three or more of the concave portions are formed to each engaging hole, these are preferably formed symmetrically to the axis of the engaging hole, which contributes to eliminate horizontal movement of the iron core pieces at the time of laminating.

A laminated iron core 61 according to a third embodiment of the present invention, wherein the present invention is further embodied, will be described.

As shown in FIG. 5, the laminated iron core 61 is a stator core of a motor wherein a number of iron core pieces 6a, 6b, 6c, 6d, 6e, 6f, 6g, 6h, 6i... (hereafter represented by 6A) having a disc-shaped appearance and substantially the same thickness are laminated by caulked joints. On the respective iron core pieces 6A, eight magnetic pole portions 63 are formed by providing eight slots 62 at equal intervals in a circumferential direction of the iron core pieces 6A. On the inner tips of the respective magnetic pole portions 63, small teeth portions 64 to concentrate lines of magnetic force on the portions are provided respectively. Accordingly, by laminating the respective iron core pieces 6A, a rotor-core hole 65 for accommodating a rotor core, which is enclosed by the magnetic pole portions 63 of the respective iron core pieces of the stator core, is formed in the middle portion of the laminated iron core 61. Furthermore, on an outer peripheral side of the laminated iron core 61, hollow regions 66 formed by the respective slots 62 are provided. Here, caulked joint of the respective iron core pieces 6A is done through caulked-joint portions 67 formed alternately to the outside (proximal side) in a radius direction and to the inside (tip side) in a radius direction of the respective magnetic pole portions 63. Hereunder, a structure of the laminated iron core 61 will be described in detail.

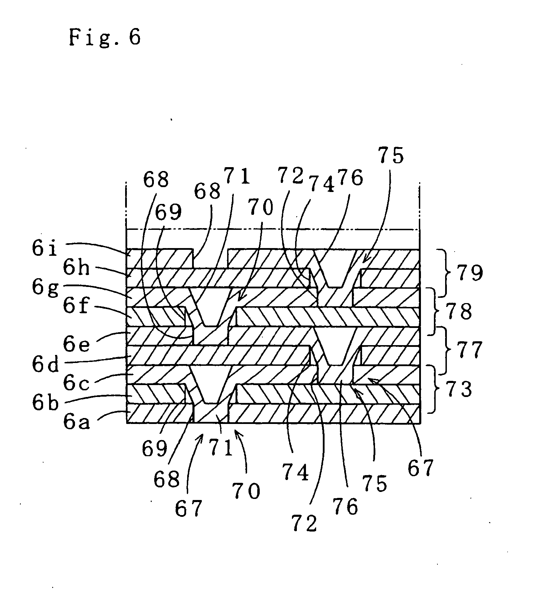

In FIG. 6, a cross-sectional structure of the laminated iron core 61 when being cut at a cross section P is shown. FIG. 6 shows a lower portion of the cross-sectional structure of the laminated iron core 61.

In the iron core piece 6a which becomes a first layer, lower engaging holes 68 (punched hole) having a rectangular shape in a plan view are formed. In the iron core piece 6b, upper engaging holes 69 (punched hole) which are larger than the lower engaging holes 68 and have a rectangular shape in a plan view are formed. Then, the iron core pieces 6a and 6b are laminated in a manner that the axes of the lower engaging holes 68 and the upper engaging holes 69 are aligned. Consequently, through-engaging holes 70 composing part of the caulked-joint portions 67 are formed on the laminated iron core pieces 6a and 6b. Moreover, on the iron core piece 6c, caulking projections 71 and lower engaging holes 72 are provided at different locations. The caulking projections 71 have a rectangular shape in a plan view and have an approximate trapezoidal shape of which proximal side is a long side in a side view. The lower engaging holes 72 have a rectangular shape in a side view. A protruding length of the caulking projections 71 is substantially twice as long as the thickness of the respective iron core pieces 6a and 6b. Furthermore, the iron core piece 6c is laminated on the iron core piece 6b in a manner that the axis of the caulking projections 71 are aligned with the axis of the through-engaging holes 70. As a result, by applying a load to a laminating direction, the caulking projections 71 can be fitted into the through-engaging holes 70, and the iron core pieces 6a, 6b, and 6c are caulked-jointed, forming a first laminated group 73.

In the iron core piece 6d, upper engaging holes 74 which are larger than the lower engaging holes 72 and have a rectangular shape in a plan view are formed. The iron core pieces 6c and 6d are laminated in a manner that the axes of the lower engaging holes 72 and the upper engaging holes 74 are aligned. Thereby, through-engaging holes 75 composing part of the caulked-joint portions 67 are formed in the laminated iron core pieces 6c and 6d. To the iron core piece 6e, caulking projections 76 and the lower engaging holes 68 are provided. The caulking projections 76 have a rectangular shape in a plan view and also have an approximate trapezoidal shape of which the proximal side is a long side in a side view, and the lower engaging holes 68 have a rectangular shape in a plan view. The protruding length of the caulking projections 76 is twice as long as the thickness of the respective iron core pieces 6c and 6d. Furthermore, the iron core piece 6e is laminated on the iron core piece 6d in a manner that the axis of the caulking projections 76 are aligned with the axis of the through-engaging holes 75. As a result, by applying a load to the laminating direction, the caulking projections 76 can be fitted into the through-engaging holes 75, and the iron core pieces 6c, 6d, and 6e are caulked-jointed, forming a second laminated group 77. Moreover, since the iron core piece 6c is used mutually in the first laminated group 73 and the second laminated group 77, the first laminated group 73 and the second laminated group 77 are caulked-jointed through the iron core piece 6c when the second laminated group 77 is formed.

Here, cross-sectional areas of the upper sides of the through-engaging holes 70 and 75 are larger than those of the lower sides, and cross-sectional areas of the tips of the caulking projections 71 and 76 are smaller than those of the proximal ends. Therefore, the caulking projections 71 and 76 can be fitted securely into the through-engaging holes 70 and 75. Moreover, the outer peripheral surfaces of the tips of the caulking projections 71 and 76 can be brought into contact with the entire inner peripheral surfaces of the lower engaging holes 68 and 72 respectively in a coherent manner, while the outer peripheral surfaces of the proximal sides of the caulking projections 71 and 76 can be attached closely to the inner peripheral surfaces of the tips of the upper engaging holes 69 and 74. Because of the above-described structure, the respective iron core pieces 6a, 6b, 6c, 6d, and 6e are strongly connected by caulked joints.

Also for the respective iron core pieces 6f, 6g, 6h, 6i..., a third laminated group 78 and a fourth laminated group 79 are sequentially formed by the iron core pieces 6e, 6f and 6g, and the iron core pieces 6g, 6h and 6i, respectively, and caulked joints are formed between the respective laminated groups. Furthermore, since the iron core pieces 6f, 6g, 6h, 6i ... have structurally the same lower engaging holes, upper engaging holes and caulking projections as the respective iron core pieces 6b to 6e have, detailed description is omitted by applying the same reference numerals.

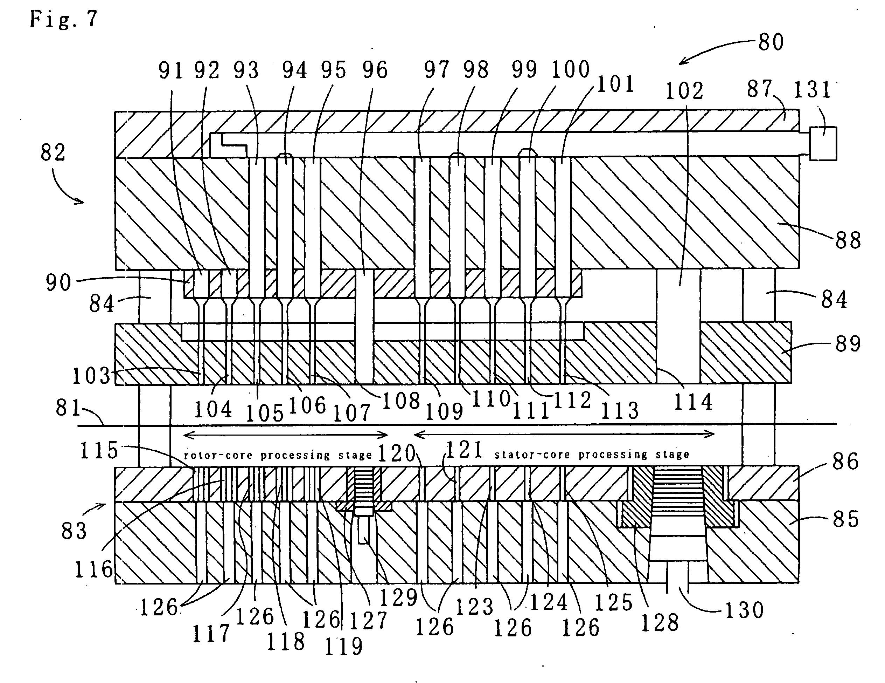

In FIG. 7, a schematic structure of a press machine 80 for producing the laminated iron core (stator core) 61 according to the present embodiment and for producing a rotor core which is also a laminated iron core and produced simultaneously with the laminated iron core 61 is shown. The respective iron core pieces of the stator core and the rotor core are produced using the same region (iron-core-piece forming region) of the same thin-plate strip material, thus the respective iron core pieces used are shown by the same reference numeral.

The press machine 80 is provided with a rotor-core processing stage and a stator-core processing stage on an upstream side and a downstream side thereof, respectively. A strip material made of a magnetic material (hereafter simply referred to as a thin plate 81) from which the respective iron core pieces 6A are sequentially blanked out is conveyed intermittently to the rotor-core processing stage and the stator-core processing stage. An upper die 82 and a lower die 83 for blanking operation are connected by a prop 84, and a hydraulically-operated plunger not shown is connected to the lower die 83, allowing the lower die 83 to move vertically to the upper die 82. The thin plate 81 is disposed between the upper die 82 and the lower die 83, and intermittently conveyed in synchronization with the press work of the upper die 82 and the lower die 83 at a predetermined speed.

The lower die 83 includes a lower die set 85 to which the plunger as a lifting mechanism is connected, and a die plate 86 provided on the upper side of the lower die set 85. The upper die 82 includes an upper die set 87 for fixing the upper die 82 to a fixing frame (not shown) of the press machine 80, a punch plate 88 fixed to the upper die set 87, and a stripper plate 89 holding the thin plate 81 with the die plate 86. Moreover, in the rotor-core processing stage, pilot-hole and rotor-core processing punches 91, 92, 93, 94 and 95, and a rotor-core blanking punch 96 are provided to the punch plate 88 through a punch-supporting plate 90. Furthermore, in the stator-core processing stage, stator-core processing punches 97, 98, 99, 100 and 101, and a stator-core blanking punch 102 are provided to the punch plate 88 through the punch-supporting plate 90. Although the lower die 83 is moved up and down while the upper die 82 is fixed in this embodiment, the present invention is also applicable to a case where the upper die is moved up and down while the lower die is fixed, or to a case where upper and lower dies are simultaneously moved closer to or away from each other.

To the stripper plate 89, through-holes 103 to 114 are provided for the pilot-hole and rotor-core processing punches 91 to 95, the rotor-core blanking punch 96, the stator-core processing punches 97 to 101, and the stator-core blanking punch 102 to be inserted. Furthermore to the die plate 86, die holes 115 to 121 and 123 to 125 are provided, in which blanked pieces that are blanked out by the punches 91 to 95 and 97 to 101 fall, respectively. To the lower die set 85, discharge ports 126 connected to the respective die holes 115 to 121 and 123 to 125 for the blanked pieces to be discharged are provided.

Right under the rotor-core blanking punch 96, a die hole (laminated-iron-core accommodating portion) 127 is provided to the lower die 83 for the blanking punch 96 to blank out and insert the iron core pieces forming a rotor core. In the die hole 127, the iron core pieces are sequentially laminated. Furthermore, right under the stator-core blanking punch 102, a die hole 128 is provided to the lower die 83 for the blanking punch 102 to blank out and insert the iron core pieces 6A forming a stator core. In the die hole 128, the iron core pieces 6A are sequentially laminated.

Further, to the lower portion of the respective die holes 127 and 128, the bottom-plate blocks 129 and 130 for supporting the respective iron core pieces 6A being blanked out are provided, respectively. In addition, the respective bottom-plate blocks 129 and 130 are connected to pressurization mechanism not shown and to rotating mechanism installed when necessary, and go down and pressurize at the same time depending on the height of the laminated iron core. Further, the bottom-plate blocks 129 and 130 perform the "rotation" of the laminated iron core e.g., rotation by 45 degrees when necessary.

Because of such a structure, when laminating the respective iron core pieces 6A in the respective die holes 127 and 128, the iron core pieces are rotated at every predetermined number of sheets around the axis thereof as a center by a predetermined angle (45 degrees) while the respective bottom-plate blocks 129 and 130 are lowered, and then the respective iron core pieces 6A are caulked-jointed, whereby laminated iron core of a rotor and a laminated iron core of a stator with a predetermined thickness can be produced. Further, to the upper die set 87, controlling mechanism 131 for suspending the operation of the respective punches 93, 94, 95, 99, 100 and 101 is provided. It is to be understood that the press machine 80 was showed as an exemplification to describe the relation between the respective punches and the die plate, and the press machine shows a part of punches and dies used for press work at the respective processes.

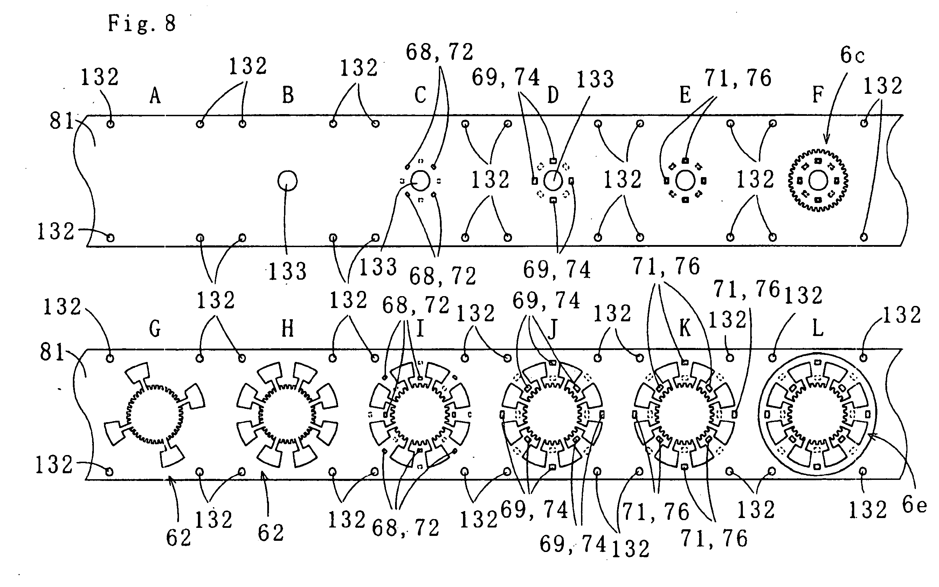

Next, a method for producing a rotor core and stator core using the press machine 80 shown in FIG. 7 will be described referring to FIG. 8 and TABLE 1.

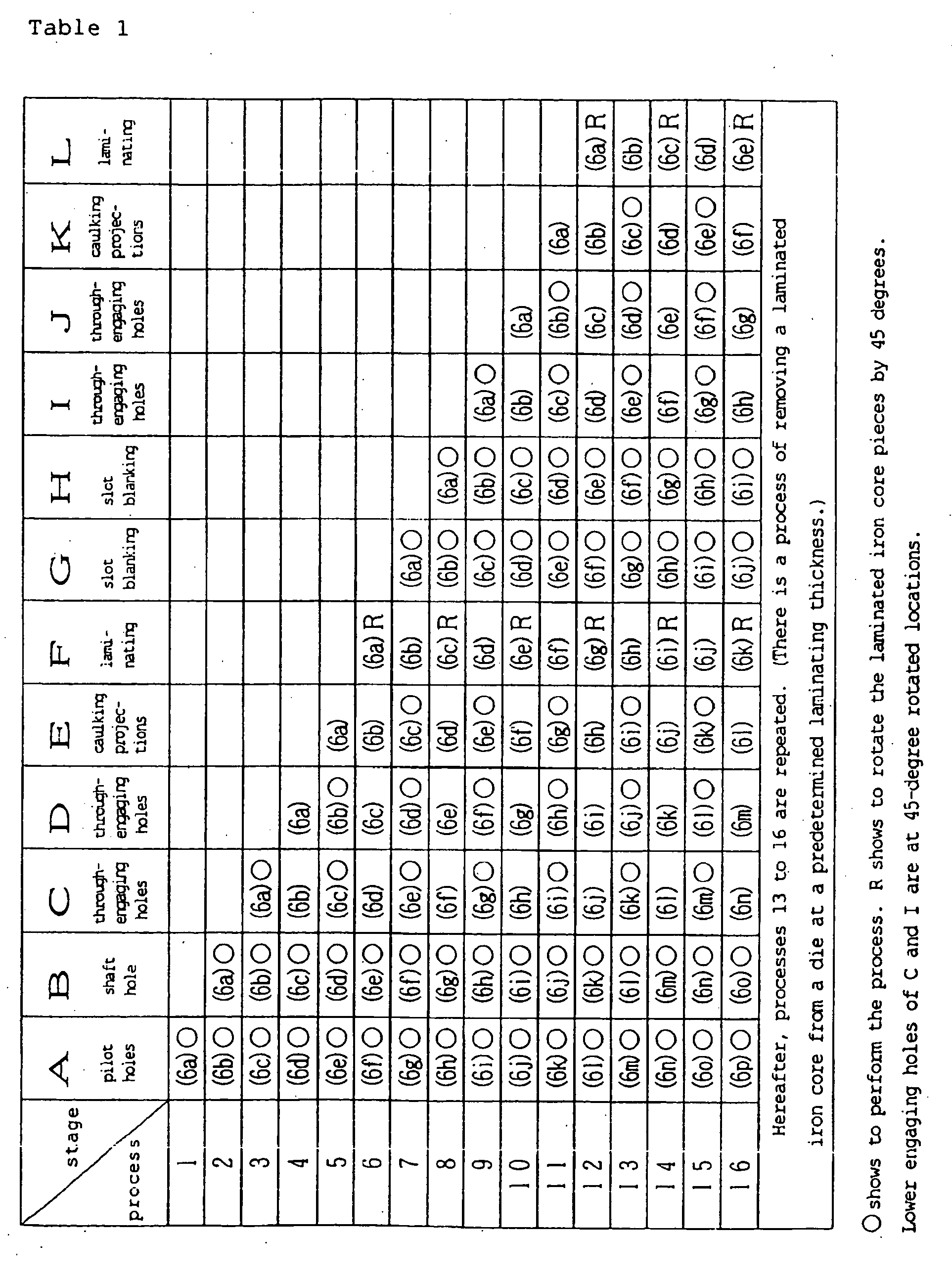

As shown in FIG. 8, the press machine 80 includes respective stages A to L. Namely, stage A of processing pilot holes 132 for conveying the thin plate 81, stage B of forming a shaft hole 133 for a rotor core, stage C of forming lower engaging holes, stage D of forming upper engaging holes at locations rotated by 45 degrees from the locations of the lower engaging holes, stage E of forming caulking projections, and stage F of blanking out the respective iron core pieces 6A forming a rotor core from the thin plate 81 and then laminating the iron core pieces 6A.

Furthermore, the press machine 80 is provided with stage G (processing the first slots 62) and stage H (processing the second slots 62) of performing slot blanking of a stator core step by step after the respective iron core pieces 6A forming a rotor core are blanked out, stage I of forming lower engaging holes, stage J of forming upper engaging holes at locations rotated by 45 degrees from the locations of the lower engaging holes, stage K of forming caulking projections, and stage L of blanking out the respective iron core pieces 6A forming a stator core from the thin plate 81 and then laminating the iron core pieces 6A.

### First Process

As shown in TABLE 1, around an iron-core-piece forming region where the iron core piece 6a is to be formed at stage A, the pilot holes 132 for conveyance are processed at both sides in the width direction of the thin plate 81 by the punch 91. Also in the succeeding processes, the pilot holes 132 are formed at stage A, thus the description will be omitted. The thin plate 81 is conveyed to the next stage.

### Second Process

At stage B, the shaft hole 133 is processed in the region where the iron core piece 6a is to be formed. Also in the succeeding processes, the shaft hole 133 is formed in iron-core-piece forming regions at stage B, accordingly the description will be omitted. The thin plate 81 is conveyed to the next stage.

### Third Process

At stage C, the lower engaging holes 68 are formed in the region where the iron core piece 6a is to be formed. Then the thin plate 81 is conveyed to the next stage.

### Fourth Process

Operations of the punches 93 and 94 are suspended by operating the controlling mechanism 131. As a result, the press work is suspended at stages C and D. Then the thin plate 81 is conveyed to the next stage.

### Fifth Process

Operation of the punch 95 is suspended by operating the controlling mechanism 131. At stage C, the lower engaging holes 72 are formed in a region where the iron core piece 6c is to be formed. At stage D, the upper engaging holes 69 are formed in a region where the iron core piece 6b is to be formed. At stage E, the press work is suspended. Then the thin plate 81 is conveyed to the next stage.

### Sixth Process

Operations of the punches 93 to 95 are suspended by operating the controlling mechanism 131. As a result, the processes are suspended at stages C to E. At stage F, the iron core piece 6a is blanked out by the blanking punch 96, and laminated on the bottom-plate block 129 in the die hole 127. Next, the "rotation" is carried out by rotating the bottom-plate block 129 by 45 degrees if necessary. Then the thin plate 81 is conveyed to the next stage.

### Seventh Process

At stage C, the lower engaging holes 72 are formed in a region where the iron core piece 6e is to be formed. At stage D, the upper engaging holes 74 are formed in a region where the iron core piece 6d is to be formed. At stage E, the caulking projections 71 are formed in the region where the iron core piece 6c is to be formed. Accordingly, the lower engaging holes 72 and the caulking projections 71 are formed in the region where the iron core piece 6c is to be formed. At stage F, the iron core piece 6b is blanked out by the blanking punch 96, and laminated on the iron core piece 6a previously laminated in the die hole 127. Consequently, the through-engaging holes 70 are formed (process A of the present invention). At stage G, the first slots 62 are processed in the region where the iron core piece 6a is to be formed by the punch 97. In the following processes, the process of stage G is performed for the respective iron-core-piece forming regions, thus the description will be omitted. Then the thin plate 81 is conveyed to the next stage.

### Eighth Process

Operations of the punches 93 to 95 are suspended by operating the controlling mechanism 131. Consequently, the processes are suspended at stages C to E. At stage F, the iron core piece 6c is blanked out by the blanking punch 96 and laminated on the iron core piece 6b previously laminated in the die hole 127. Then the caulking projections 71 dig into the through-engaging holes 70, causing caulked joint, whereby the first laminated group 73 is formed (process B of the present invention). Then the first laminated group 73 is rotated by 45 degrees to perform the "rotation". At stage H, the second slots 62 are processed in the region where the iron core piece 6a is to be formed by the punch 98 (hereafter, the description of the same process will be omitted). Thereby, all of the slots 62 are completed in the region where the iron core piece 6a is to be formed. Then the thin plate 81 is conveyed to the next stage.

### Ninth Process

At stage C, the lower engaging holes 72 are formed in a region where the iron core piece 6g is to be formed. At stage D, the upper engaging holes 69 are formed in a region where the iron core piece 6f' is to be formed. At stage E, the caulking projections 76 are processed in the region where the iron core piece 6e is to be formed. Consequently, in the region where the iron core piece 6e is to be formed, the lower engaging holes 68 and the caulking projections 76 are formed. At stage F, the iron core piece 6d is blanked out by the blanking punch 96 and laminated on the iron core piece 6c previously laminated in the die hole 127. As a result, the through-engaging holes 75 are formed (process C of the present invention). At stage I, the lower engaging holes 68 are formed in the region where the iron core piece 6a is to be formed. Then the thin plate 81 is conveyed to the next stage.

### Tenth Process

Operations of the punches 93 to 95, 99 and 100 are suspended by operating the controlling mechanism 131. The processes are suspended at stages C to E. At stage F, the iron core piece 6e is blanked out by the blanking punch 96 and laminated on the iron core piece 6d previously laminated in the die hole 127. As a result, the caulking projections 76 are fitted into the through-engaging holes 75 while caulked joint is caused, thereby forming the second laminated group 77 (process B of the present invention). Next, if necessary, the bottom-plate block 129 is rotated by 45 degrees to perform the "rotation". At stages I and J, the processes are suspended. Then the thin plate 81 is conveyed to the next stage.

### Eleventh Process

Operation of the punch 101 is suspended by operating the controlling mechanism 131. Here, processes performed at the stages A to F are the same as the processes performed at the stages A to F in the seventh process, therefore the detailed description is omitted. At stage I, the lower engaging holes 72 are formed in the region where the iron core piece 6c is to be formed. At stage J, the upper engaging holes 69 are formed in the region where the iron core piece 6b is to be formed. At stage K, process is suspended. Then the thin plate 81 is conveyed to the next stage.

### Twelfth Process

Operations of the punches 93 to 95 and 99 to 101 are suspended by operating the controlling mechanism 131. Here, processes performed at the stages A to F (in detail, A to G) are the same as the processes performed at the stages A to F in the eighth process, therefore the detailed description is omitted. At stages I to K, the processes are suspended. At stage L, the iron core piece 6a is blanked out by the blanking punch 102 and laminated on the bottom-plate block 130 in the die hole 128. Next, if necessary, the "rotation" is carried out by rotating the bottom-plate block 130 by 45 degrees. Then the thin plate 81 is conveyed to the next stage.

### Thirteenth Process

Processes performed at the stages A to H are the same as the processes performed at the stages A to H in the ninth process, therefore the detailed description is omitted. At stage I, the lower engaging holes 68 are formed in the region where the iron core piece 6e is to be formed. At stage J, the upper engaging holes 74 are formed in the region where the iron core piece 6d is to be formed. At stage K, the caulking projections 71 are formed in the region where the iron core piece 6c is to be formed. Thereby, in the region where the iron core piece 6c is to be formed, the lower engaging holes 72 and the caulking projections 71 are formed. At stage L, the iron core piece 6b is blanked out by the blanking punch 102 and laminated on the iron core piece 6a laminated previously in the die hole 128. As a result, the through-engaging holes 70 are formed (process A of the present invention). Then the thin plate 81 is conveyed to the next stage.

### Fourteenth Process

Operations of the punches 93 to 95 and 99 to 101 are suspended by operating the controlling mechanism 131. Here, processes performed at the stages A to I are the same as the processes performed at the stages A to I in the tenth process, therefore the detailed description is omitted. At stages J and K, the processes are suspended. At stage L, the iron core piece 6c is blanked out by the blanking punch 102 and laminated on the iron core piece 6b laminated previously in the die hole 128. As a result, the caulking projections 71 dig into the through-engaging holes 70 while caulked joint is caused, thereby forming the first laminated group 73 (process B of the present invention). Next, if necessary, the "rotation" is carried out by rotating the bottom-plate block 130 by 45 degrees. Then the thin plate 81 is conveyed to the next stage.

### Fifteenth Process

Processes performed at the stages A to J are the same as the processes performed at the stages A to J in the eleventh process, therefore the detailed description is omitted. At stage K, the caulking projections 76 are formed in the region where the iron core piece 6e is to be formed. Thereby, the lower engaging holes 68 and the caulking projections 76 are formed in the region where the iron core piece 6e is to be formed. At stage L, the iron core piece 6d is blanked out by the punch 102 and laminated on the iron core piece 6c laminated previously in the die hole 128. Consequently, the through-engaging holes 75 are formed (process C of the present invention). Then the thin plate 81 is conveyed to the next stage.

### Sixteenth Process

Operations of the punches 93 to 95 and 99 to 101 are suspended by operating the controlling machine 131. Here, processes performed at the stages A to K are the same as the processes performed at the stages A to K in the twelfth process, therefore the detailed description is omitted. At stage L, the iron core piece 6e is blanked out by the blanking punch 102 and laminated on the iron core piece 6d laminated previously in the die hole 128. As a result, the caulking projections 76 dig into the through-engaging holes 75 while caulked joint is caused, thereby forming the second laminated group 77 (process B of the present invention). At this point, caulked joint is caused between the first laminated group 73 and the second laminated group 77. Next, if necessary, the "rotation" is carried out by rotating the bottom-plate block 130 by 45 degrees. Then the thin plate 81 is conveyed to the next stage.

### Seventeenth and the succeeding Processes

In the seventeenth and the succeeding processes, the thirteenth to sixteenth processes are repeated. Since the thickness of the laminated iron core 61 in each of the die holes 127 and 128 increases whenever the caulked joint is performed, the bottom-plate blocks 129 and 130 are gradually lowered using the pressurization mechanism (e.g., hydraulic cylinder not shown). After being laminated to a prescribed laminating thickness, the laminated iron core is discharged below the die holes 127 and 128. As for the laminated iron core of a rotor, the final process is completed by laminating the iron core piece whereon the caulking projections are formed (stage F). The laminated iron core of a stator is completed by the process of laminating the iron core piece whereon the caulking projections are formed (stage L). In this case, the punched holes (lower engaging holes) formed on the iron core piece at the final stage can be omitted.

In this embodiment, the laminated iron core pieces are rotated (i.e., the "rotation") by a prescribed angle (45 degrees) after the iron core pieces 6c, 6e, 6g etc. whereon the caulking projections are formed are laminated so that the locations of the caulking projections may not overlap in the iron core layers adjoining one above the other (e.g., the first laminated group 73, the second laminated group 77, the third laminated group 78 etc.). However, as an alternative, the laminated iron core can be produced by changing the locations of the through-engaging holes and the caulking projections to be fitted therein at every iron core layer adjoining one above the other by means of increasing the number of the stages for punch work and choosing the punch to be used for each iron core piece. In this case, the "rotation" of the iron core pieces laminated in the die holes is not performed. Also in this case, the number of the stages of the press work can be reduced by providing a plurality of selective punches to one stage.

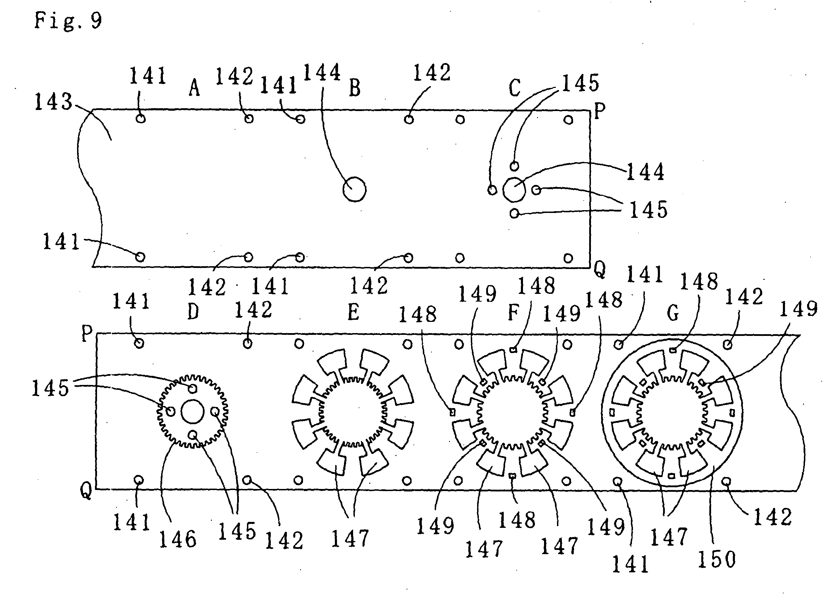

Next, a method for producing a laminated iron core according to a fourth embodiment of the present invention will be described referring to FIG. 9.

At stage A, in a thin plate 143 made of a magnetic material whereon four pilot holes 141 and 142 are formed by blanking, an iron core piece of a rotor core and a stator core is formed in a portion (called as an iron-core-piece forming region) surrounded by the four pilot holes 141 and 142. In the iron-core-piece forming region surrounded by the pilot holes 141 and 142, a shaft hole (an axial hole) 144 is formed at stage B. Then, at the next stage C, lower engaging holes (punched holes) of four through-engaging holes 145 are formed. The four through-engaging holes 145 are disposed at locations of angles 0 degrees, 90 degrees, 180 degrees, and 270 degrees based on the center of the iron-core-piece forming region. In an iron-core-piece forming region (thin plate) which is subsequently conveyed to stage C, the upper engaging holes which form the through-engaging holes 145 are formed. In the thin plate 143 which is further subsequently conveyed to stage C, caulking projections to be fitted into the through-engaging holes 145 and lower engaging holes which forms the through engaging holes 145 at the locations 45 degrees at the same radius to the respective through-engaging holes 145. Moreover at stage C, a different punch and die are used whenever different engaging holes and caulking projections are formed.

Next stage D is a place for laminating a rotor core by laminating initially an iron core piece 146 of the rotor core having the lower engaging hole of the through-engaging holes 145, subsequently the iron core piece 146 of the rotor core having the upper engaging holes of the through-engaging holes 145, and further laminating an iron core piece having caulking projections and the lower engaging holes at a position of 45 degrees. After this laminating is finished, the iron core pieces being laminated are rotated by 45 degrees to a predetermined direction so that the caulking projections to be fitted into the through-engaging holes 145 are disposed at locations of the through-engaging holes 145 shown in the figure. After this, the iron core piece 146 of the rotor core whereon the upper engaging holes are formed is laminated, and further above, an iron core piece whereon the caulking projections and the lower engaging holes at locations of 45 degrees are formed is laminated, and the iron core pieces being laminated are rotated by 45 degrees to the predetermined direction. By performing such processes, the laminated iron core with a predetermined height is formed.

From the iron-core-piece forming region from which the rotor core has been blanked out, slots 147 forming magnetic poles of a stator core is blanked out at stage E. At the next stage F, the upper and lower engaging holes (punched holes) forming four through-engaging holes 148 outside and four through-engaging holes 149 inside respectively and the caulking projections are formed in sequentially conveyed iron-core-piece forming regions. Stage G is a region for laminating a stator core by initially laminating an iron core piece 150 of the stator core having the lower engaging holes, subsequently the iron core piece 150 of the stator core having the upper engaging holes, and further laminating the iron core piece 150 of the stator core having the caulking projections to be fitted into the through-engaging holes formed by the upper and lower engaging holes. Moreover, to the iron core piece whereon the caulking projections are formed, the lower engaging holes (eight holes) are also formed on locations of 45 degrees. After the iron core piece 150 of the stator core having the caulking projections is laminated, a die supporting the laminated iron core rotates (the "rotation") by 45 degrees to the predetermined direction. Accordingly, as shown in stage G in the figure, the lower engaging holes forming the lower part of the through-engaging holes are disposed at locations where the caulking projections were located, whereby the iron core piece 150 of the stator core having the upper engaging holes can be laminated sequentially above, and further above, the iron core piece 150 of the stator core having the caulking projections can be laminated. As the laminating process of the rotor core, the laminated iron core of a stator core is completed by repeating the above processes.

In the method for producing the laminated iron core according to the fourth embodiment, the plurality of through-engaging holes and caulking projections were formed by changing the punch and the matching die at stages C and F. However, it should be understood that the press work can be performed by dividing these processes into a plurality of stages as shown in the third embodiment as a matter of course.

Further, although the caulking projections had the approximate trapezoidal shape in the above-described embodiments, it can be made in the approximate multistep trapezoidal shape depending on the sizes of the through-engaging holes formed in the iron core pieces of the respective layers.

Furthermore, it should be understood that the present invention is not limited to the above-described embodiments, and such as modifications within the scope not changing the gist of the present invention can be made as a matter of course. Also, the present invention is applicable to a case where the above first to fourth embodiments are combined to form or produce the laminated iron core.

In a laminated iron core according to the present invention, caulking projections formed on one sheet of an iron core piece are fitted into through-engaging holes formed in a plurality of iron core pieces, forming caulked joints to laminate and joint the plurality of iron core pieces, and further, the caulking projections adjoining one above the other are changed in the position to be formed. Accordingly, even when the thickness of the respective iron core pieces is thin, the caulking projections are fitted into the through-engaging holes formed in the plurality of iron core pieces so as to secure the fitting depth of the caulking projections. As a result, strength of the assembled iron core pieces is improved.

In the laminated iron core according to the present invention, when proximal portions of the caulking projections are narrowed toward tips thereof, and among the through-engaging holes formed in the plurality of iron core pieces, the through-engaging holes of the iron core pieces disposed right under the respective iron core pieces having the caulking projections are made broader than a width of the caulking projections, the caulking projections are easily fitted into the iron core pieces disposed right under the respective iron core pieces having the caulking projections. Moreover, after the caulking projections are fitted in a little, broadened through-engaging holes (upper engaging holes) become guides for the caulking projections whereby twisting and bending of the caulking projections are less likely to occur. As a result, occurrence of the defective products is sharply decreased.

In the laminated iron core according to the present invention, when concave portions are formed partly on circumferential edges of the through-engaging holes formed in the iron core pieces, the caulking projections fit into the concave portions upon laminating, whereby caulking strength is improved and the laminated iron core becomes stronger.

In the laminated iron core according to the present invention, when two or more concave portions are formed and the respective concave portions are formed symmetrically to axes of the through-engaging holes, ill balance in the caulking projections is less likely to occur. Accordingly, offset laminating of the iron core pieces does not occur. As a result, occurrence of the defective products is reduced.

In the laminated iron core according to the present invention, when the caulking projections are formed in an approximate trapezoidal or approximate multistep trapezoidal shape in a side view, the corner portions of the caulking projections dig into the through-engaging holes and the twisting of the caulking projections does not occur. Accordingly, the strength of the laminated iron core is improved, and also, bending of the caulking projections is less likely to occur.

In the laminated iron core according to the present invention, when tips of the caulking projections are broadened, engagement between the caulking projections and the through-engaging holes becomes secure, and moreover, a stronger laminated iron core can be formed.

Next, a laminated iron core according to the present invention can be produced by a method, in which a plurality of iron core pieces are laminated and caulked-jointed, the iron core pieces being blanked from a thin plate made of a magnetic material by a press machine and having caulking projections and through-engaging holes, the method comprising: a process A of blanking a plurality of iron core pieces from a thin plate made of a magnetic material by a press machine and then partially laminating the iron core pieces, the iron core pieces having through-engaging holes; a process B of laminating an iron core piece having caulking projections to be fitted to the bottom of the through-engaging holes formed in the plurality of iron core pieces laminated in the previous process, the iron core piece further having punched holes composing part of through-engaging holes for new caulking projections at above positions and formed at locations different from locations where the caulking projections are formed; and a process C of laminating an iron core piece having punched holes, which compose part of through-engaging holes in alignment with the axes of the punched holes of the iron core pieces laminated in the process B, wherein the process B and process C are repeated and a final process comprises the process B so as to form a laminated iron core laminated to a predetermined thickness. Thereby, the laminated iron core having a structure wherein the caulking projections formed on one sheet of the iron core piece dig into the through-engaging holes of the plurality of the iron core pieces can be produced by using a press machine.

Further in the method for producing the laminated iron core, when a step of forming the punched holes composing the through-engaging holes is omitted in the process B at the final process, processing useless holes on a topmost portion of the laminated iron core can be eliminated, thus improving the appearance.

In the method for producing the laminated iron core, when the laminated iron core is a motor core and rotation of the iron core pieces being laminated are carried out after the completion of the process B, even if the iron core pieces are uneven in thickness, uneven margin of error is dissolved and the laminated iron core with a predetermined thickness can be formed.

In the method for producing the laminated iron core, when a protruding length of the caulking projections is longer than a total length (thickness) of the through-engaging holes wherein the caulking projections to be fitted within a slight range, and also, proximal portions of the caulking projections are broadened and distal portions of the caulking projections are crushed at the time of laminating, the caulking projections are jointed strongly with the through-engaging holes. Accordingly, a stronger laminated iron core can be produced.

In the method for producing the laminated iron core, when a plurality of concave portions are equally formed at least on circumferential edges of the lower part of the through-engaging holes, part of the caulking projections is further fitted in the concave portions and tips of the concave portions hook the caulking portions. Therefore, the laminated iron core can be produced in which the caulking projections are prevented from falling off, and moreover, the caulking projections are prevented from bending by the force of the caulking projections fitted into the concave portions.

## Claims

1. A laminated iron core formed by laminating thin magnetic iron core sheets, comprising:
iron core sheets (13, 15) having caulking projections(16, 20) and disposed by predetermined layers, a protruding length of the caulking projections (16, 20) being at least twice as long as a sheet thickness of the iron core sheets;
and
at least two iron core sheets (11, 12, 13, 14, 15) having engaging holes (17, 18, 21, 22) for the caulking projections to be fitted in and laminated under the respective iron core sheets having the caulking projections,
wherein the respective iron core sheets (13, 15) having the caulking projections (16, 20) have engaging holes (17, 21), for caulking projections of iron core sheets of above layers thereof to be fitted in, at locations different from locations where the caulking projections are formed; and
wherein the caulking projections (16, 20) are narrowed toward tips thereof, **characterized in that**: among the engaging holes formed in the plurality of iron core sheets and engaging the - respective caulking projections, the size of the engaging holes (18, 22) of the iron core sheets (12, 14) disposed right under the respective iron core sheets (13, 15) having the caulking projections (16, 20) is made larger than that of the engaging holes (17, 21) formed on the lower iron core sheets (11, 13) and the respective caulking projections (16, 20) are fitted in the engaging holes (17,18, 21, 22) in a coherent manner.

2. The laminated iron core according to claim 1, wherein the size of the engaging holes (18, 22) on the iron core sheets (12, 14) right under the iron core sheets (13, 15) whereon the caulking projections (16, 20) are formed is larger than that of the engaging holes (16, 20) on the iron core sheets (11, 13) thereunder by a range of 10 to 40%.

3. The laminated iron core according to one of claim 1 or 2, wherein concave portions (49, 50, 53, 54) are formed partly on circumferential edges of the engaging holes (48, 52) formed in the iron core sheets.

4. The laminated iron core according to claim 3, wherein two or more of the concave portions (49, 50, 53, 54) are formed, the respective concave portions being formed symmetrically to axes of the engaging holes (48, 52).

5. The laminated iron core according to one of claims 1 to 4, wherein the caulking projections (16, 20) have an approximate trapezoidal or approximate multistep trapezoidal shape in a side view.

6. The laminated iron core according to one of claims 1 to 5, wherein the tips of the caulking projections (16, 20) are broadened.

## Patentansprüche

1. Laminierter Eisenkern, der durch Laminieren dünner magnetischer Eisenkernbleche hergestellt wird, mit:
Eisenkernblechen (13, 15) mit Verstemmvorsprüngen (16, 20), die in vorgegebenen Lagen angeordnet sind, wobei eine Vorsprunglänge der Verstemmvorsprünge (16, 20) mindestens doppelt so groß ist wie die Blechdicke der Eisenkernbleche; und
wobei mindestens zwei Eisenkernbleche (11, 12, 13, 14, 15) Eingriffslöcher (17, 18, 21, 22) haben, in die die Verstemmvorsprünge eingepasst werden können, und unter den jeweiligen Eisenkernblechen mit den Verstemmvorsprüngen laminiert sind;
wobei in den jeweiligen Eisenkernblechen (13, 15) mit den Verstemmvorsprüngen (16, 20) Eingriffslöcher (17, 21), in die Verstemmvorsprünge von Eisenkernblechen darüber liegender Lagen einpassbar sind, an Stellen ausgebildet sind, die von Stellen verschieden sind, an denen die Verstemmvorsprünge ausgebildet sind; und
wobei die Verstemmvorsprünge (16, 20) sich zu ihren Spitzen hin verjüngen;
**dadurch gekennzeichnet, dass**
unter den Eingriffslöchern, die in den mehreren Eisenkernblechen ausgebildet sind und mit denen die jeweiligen Verstemmvorsprünge in Eingriff stehen, die Größe der Eingriffslöcher (18, 22) der Eisenkernbleche (12, 14), die unmittelbar unter den jeweiligen Eisenkernblechen (13, 15) mit den Verstemmvorsprüngen (16, 20) angeordnet sind, größer ist als die Größe der Eingriffslöcher (17, 21), die in den darunter angeordneten Eisenkernblechen (11, 13) ausgebildet sind, und die jeweiligen Verstemmvorsprünge (16, 20) auf eine einheitliche Weise in die Eingriffslöcher (17, 18, 21, 22) eingepasst sind.

2. Laminierter Eisenkern nach Anspruch 1, wobei die Größe der Eingriffslöcher (18, 22) in den Eisenkernblechen (12, 14) unmittelbar unter den Eisenkernblechen (13, 15), auf denen die Verstemmvorsprünge (16, 20) ausgebildet sind, im Bereich von 10 bis 40% größer ist als die Größe der Eingriffslöcher (16, 20) in den darunter angeordneten Eisenkernblechen (11, 13).

3. Laminierter Eisenkern nach einem der Ansprüche 1 oder 2, wobei in einem Teil der Umfangsränder der in den Eisenkernblechen ausgebildeten Eingriffslöcher (48, 52) konkave Abschnitte (49, 50, 53, 54) ausgebildet sind.

4. Laminierter Eisenkern nach Anspruch 3, wobei zwei oder mehr der konkaven Abschnitte (49, 50, 53, 54) ausgebildet sind, wobei die jeweiligen konkaven Abschnitte symmetrisch zu Achsen der Eingriffslöcher (48, 52) ausgebildet sind.

5. Laminierter Eisenkern nach einem der Ansprüche 1 bis 4, wobei die Verstemmvorsprünge (16, 20) in einer Seitenansicht betrachtet näherungsweise trapezförmig oder näherungsweise in einer mehrstufigen Trapezform ausgebildet sind.

6. Laminierter Eisenkern nach einem der Ansprüche 1 bis 5, wobei die Spitzen der Verstemmvorsprünge (16, 20) verbreitert sind.

## Revendications

1. Noyau de fer stratifié, formé en stratifiant des feuilles de noyau de fer magnétique fines, comprenant :
des feuilles de noyau de fer (13, 15) ayant de projections de calfatage (16, 20) et disposées en couches prédéterminées, une longueur saillante des projections de calfatage (16, 20) étant au moins deux fois plus longue que l'épaisseur de feuille desdites feuilles de noyau de fer ;
et
au moins deux feuilles de noyau de fer (11, 12, 13, 14, 15) ayant des orifices de prise (17, 18, 21, 22) pour y installer les projections de calfatage et étant stratifiés sous les feuilles de noyau de fer respectives ayant des projections de calfatage,
dans lequel les feuilles de noyau de fer respectives (13, 15) ayant des projections de calfatage (16, 20) ont des orifices de prise (17, 21), pour y installer des projections de calfatage des feuilles de noyau de fer des couches supérieures, à des endroits différents des endroits où les projections de calfatage sont formées ; et
dans lequel les projections de calfatage (16, 20) sont rétrécies vers leurs pointes, **caractérisé en ce que**, parmi les orifices de prise formés dans la pluralité des feuilles de noyau de fer et mettant en prise les projections de calfatage respectives, la taille des orifices de prise (18, 22) des feuilles de noyau de fer (12, 14) disposées directement sous les feuilles de noyau de fer respectives (13, 15) ayant les projections de calfatage (16, 20) est réalisée plus grande que celle des orifices de prise (17, 21) formés sur les feuilles de noyau de fer inférieur (11, 13) et les projections de calfatage respectives (16, 20) sont installées dans les orifices de prise (17, 18, 21, 22) de manière cohérente.

2. Noyau de fer stratifié selon la revendication 1, dans lequel la taille des orifices de prise (18, 22) sur les feuilles de noyau de fer (12, 14) directement sous les feuilles de noyau de fer (13, 15), sur lesquelles les projections de calfatage (16, 20) sont formées, est supérieure à celle des orifices de prise (16, 20) sur les feuilles de noyau de fer (11, 13) situées en dessous, d'une gamme de 10 à 40%.

3. Noyau de fer stratifié selon l'une des revendications 1 ou 2, dans lequel des parties concaves (49, 50, 53, 54) sont ménagées partiellement sur des bords périphériques des orifices de prise (48, 52) formés dans les feuilles de noyau de fer.

4. Noyau de fer stratifié selon la revendication 3, dans lequel au moins deux des parties concaves (49, 50, 53, 54) sont formées, les parties concaves respectives étant ménagées symétriquement à des axes des orifices de prise (48, 52).

5. Noyau de fer stratifié selon l'une des revendications 1 à 4, dans lequel les projections de calfatage (16, 20) ont une forme trapézoïdale approximative ou une forme trapézoïdale approximative à plusieurs positions en vue latérale.

6. Noyau de fer stratifié selon l'une des revendications 1 à 5, dans lequel les pointes des projections de calfatage (16, 20) sont élargies.
